# EUROPEAN PATENT APPLICATION

(11) **EP 0 708 063 A1**
(43) Date of publication of application: **24.04.1996**
(21) Application number: 95306311.2
(22) Date of filing: 08.09.1995
(51) Int. Cl.: C03C 17/34, C03C 17/22, H01J 29/86, H01J 29/89

(54) **Antistatic and antireflective coating for screens**

(30) Priority: 26.09.1994 US 312325
(71) Applicant: Chunghwa Picture Tubes, Ltd., Yangmei Taoyuan, Taiwan 32606 (TW)
(72) Inventor: Tong, Hua-Sou, Arlington Heights, Illinois 60004 (US); Hu, Chun-Min, Hsing Erh Road, Keelung (TW)
(74) Representative: Newby, Martin John

(57) **Abstract**

A multilayer antistatic and antireflective coating (44) for the outer surface of a light-transmitting substrate (40), such as a video display panel of a cathode ray tube (CRT) or a flat panel display, includes an inner first layer (46), e.g. of P(Phosphor)-doped or F(Fluorine)-doped tin oxide which is heated to a high temperature causing the first layer to diffuse into the substrate (40) rendering the outer surface of the substrate highly conductive. Electrically grounding an edge of the substrate provides the substrate with antistatic, electrostatic and electromagnetic shielding protection. An antireflective second layer (48), such as of silicon oxide, magnesium fluoride, having a low light refractive index, e.g. from 1.2 to 1.45, is then applied over the antistatic layer in one embodiment. In another embodiment, an antireflective second layer (48) having a high light refractive index, e.g. from 1.8 to 2.2, is applied over the antistatic first layer (46) followed by an antireflective third layer (50) having a low light refractive index, e.g. from 1.2 to 1.45. In one embodiment, the thickness of the second and third layers satisfies the 1/4 wavelength antireflective criteria for maximum light reflection suppression.

## Description

This invention relates generally to multilayer antistatic and antireflective coatings for light transmitting screens, e.g. glass video panels, and is particularly directed to an antistatic inner layer which at high temperatures diffuses into the screen rendering the outer surface of the screen electrically conductive, and one or more antireflective outer layers applied over the inner layer and having a selected light refractive index.

Cathode ray tubes (CRTs) operate at high voltages causing the glass display panel surface of the CRT to become electrically charged by static induction. This static electricity attracts dust and other contaminants in the air causing them to collect on the outer surface of the display panel which degrades the video image presented on the display panel. In addition, when a person touches the display panel of the CRT, he or she may experience a slight shock caused by discharge of the static electricity. As well as being unpleasant to the touch, this static discharge may disrupt the operation of a computer when the CRT is employed in a computer terminal.

In addition to particles, such as of dust, collecting on their outer surface, video display panels also suffer from light reflection which degrades the video image. Various approaches have been adopted to reduce light reflection from the outer surface of the display panel, including the application of a multilayer coating to the panel, with each layer having a specific light refractive index. According to one approach, several antireflective outer coating layers are applied to an antistatic inner coating layer applied directly to the outer surface of the panel. The light refractive index of each of the outer coating layers may alternate between high and low values for adjacent layers. In another approach, the light refractive index of the coating layers decreases in the direction from the surface of the display panel to the outermost coating layer. The thickness of each of the antireflective coating layers is typically about 1/4 wavelength of the light for which reflection is to be suppressed.

One problem encountered in prior art antistatic and antireflective coatings for display panels is in the limited durability of these coatings, particularly coatings which provide antistatic protection. These coatings deteriorate with time which is accelerated with mechanical wiping of the display panel during cleaning. In addition, an inner layer of the multilayer coating is frequently required to provide both antistatic protection and reflection suppression. In order to provide an acceptable antireflective effect, the choice of materials for the inner layer which also must provide antistatic protection is limited. Generally, selection of a given material based upon its antireflective characteristics results in only limited antistatic protection for the display panel. In addition, prior art antireflective outer coating layers are generally porous and mechanically weak. This accelerates degradation of the antistatic inner coating layer particularly, for example, when the panel is mechanically wiped.

The present invention addresses the aforementioned limitations of the prior art by providing an antistatic inner layer which when heated diffuses into a substrate,such as a glass display panel, resulting in a substantial increase in the conductivity of the glass panel for improved antistatic protection and durability. One or more antireflective layers may be applied over the antistatic layer. The inventive antistatic coating may also be provided with antireflective characteristics allowing for flexibility in the materials selected for use in the multilayer antistatic and antireflective coating.

Accordingly it is an object of the present invention to provide a conductive coating for a light transmitting screen, e.g. a video display panel, which, for example, affords the screen with antistatic, and preferably also electrostatic and electromagnetic, shielding protection.

It is another object of the present invention to provide an antistatic coating for a light transmitting screen, e.g. a video display panel, which at high temperature diffuses into the outer surface of the screen to provide the screen with high electrical conductivity in a highly durable arrangement not subject to mechanical degradation such as by rubbing during screen cleaning.

Yet another object of the present invention is to provide an antistatic/antireflective coating for a substrate having high electrical conductivity and a high light refractive index which may be employed with a low light refractive index coating to provide both antistatic and antireflective protection for the substrate.

According to one aspect of the present invention, there is provided a method for coating an outer surface of a light-transmitting substrate, the method being according to the ensuing claim 1.

According to another aspect of the present invention, there is provided a light transmitting screen according to the ensuing claim 13.

Embodiments of the invention will now be described, by way of example only, with particular reference to the accompanying drawings, where like reference characters identify like elements throughout the various figures, in which:
Figure 1 is a longitudinal sectional view of a CRT incorporating an antistatic and antireflective coating in accordance with the principles of the present invention;
Figure 2 is a partial sectional view of a flat display panel having an antistatic and antireflective coating in accordance with the present invention on the outer surface thereof; and
Figure 3 is a flow chart illustrating the steps involved in applying an antistatic and antireflective coating in accordance with the present invention to the outer surface of a light transmitting panel.

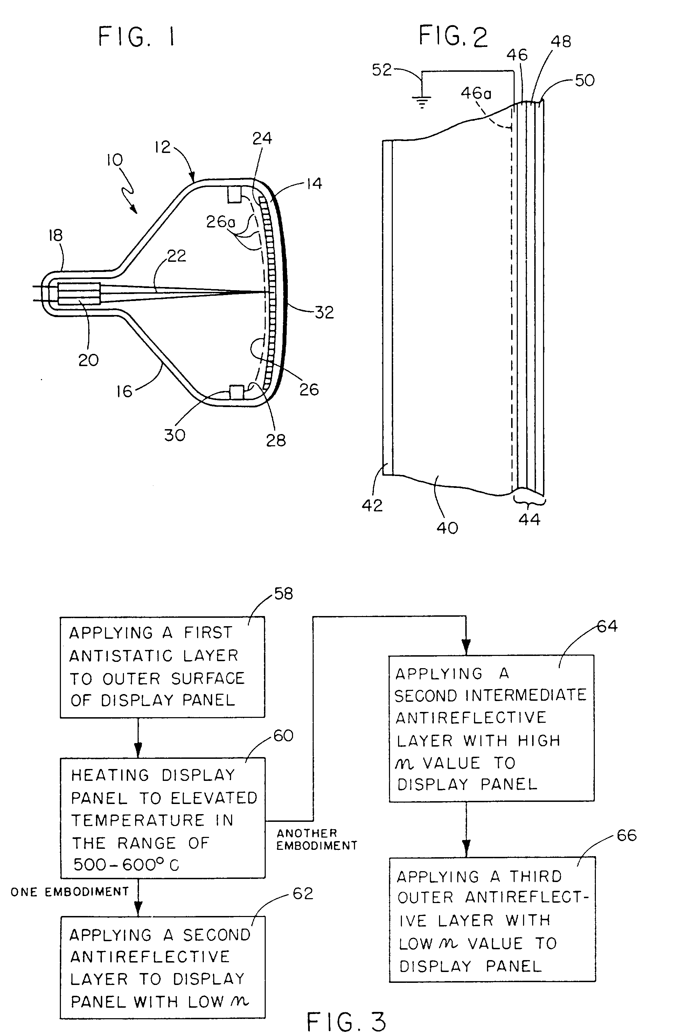

Figure 1 shows a sectional view of a colour CRT 10 incorporating an antistatic and antireflective coating 32 in accordance with the principles of the present invention. CRT 10 includes a sealed glass envelope 12 having a forward light transmitting, glass display screen or faceplate 14, an aft neck portion 18, and an intermediate funnel portion 16. A phosphor screen 24 is disposed on the inner surface of the glass faceplate 14 and includes a plurality of discrete phosphor deposits, or elements, which emit light when an electron beam is incident thereon to produce a video image on the faceplate. The colour CRT 10 includes three electron beams 22 directed onto, and focused upon, the glass faceplate 14. Disposed in the neck portion 18 of the glass envelope 12 are a plurality of electron guns 20 typically arranged in an inline array for directing the electron beams 22 onto the phosphor screen 24. The electron beams 22 are deflected vertically and horizontally in unison across the phosphor screen 24 by a magnetic deflection yoke which , for simplicity, is not shown in Figure 1. Spaced from the phosphor screen 24 is a shadow mask 26 having a plurality of spaced electron beam passing apertures 26a and a skirt portion 28 around the periphery thereof. The shadow mask skirt portion 28 is securely attached to a shadow mask mounting fixture 30 around the periphery of the shadow mask. The shadow mask mounting fixture 30 is attached to an inner surface of the glass envelope 12 of the CRT and may include conventional attachment and positioning structures such as a mask attachment frame and a mounting spring which, for simplicity, are also not shown in Figure 1. The shadow mask mounting fixture 30 may be attached to the inner surface of the glass envelope 12 and the shadow mask 26 may be attached to the mounting fixture by conventional means such as weldments or a glass-based frit.

Referring to Figure 2, there is shown a partial sectional view of a portion of a light-transmitting flat glass display panel, or faceplate, 40 having a phosphor layer 42 on its inner surface and a multilayer antistatic and antireflective coating 44 in accordance with the present invention on its outer surface. The antistatic and antireflective coating 44 includes an inner antistatic first layer 46 applied directly to the outer surface of the flat glass display panel 40. The inner antistatic first layer 46 is preferably comprised of either an F(Fluorine)-doped or P(Phosphor)-doped tin oxide which is applied to the outer surface of the display panel in the form of a thin layer while heated to a temperature in the range of from 500°C to 600°C. Heating the display panel 40 and the inner antistatic first layer 46 to a temperature in the range of from 500°C to 600°C causes a portion of the antistatic first layer to diffuse into the outer surface portion of the display panel in the form of a thin absorbed layer 46a (shown in dotted line form) having antistatic characteristics. It has been found that the absorbed portion 46a of the antistatic layer diffuses into the display panel 40 to a depth of the order of from 0.5 to 1µm.

The electrical conductivity of the outer surface portion of the display panel 40 has been found to be as high as from 20 to 10 ohm-cm. A conductor 52 may be attached to the outer surface portion of the display panel 40 for connecting the display panel to neutral ground potential. An antistatic layer 46 comprised of either F-doped or P-doped tin oxide has a light refractive index of the order of 1.8. The thickness of the inner antistatic layer is preferably of the order of 0.3µm, although this thickness is not critical and may vary over a wide range of values.

In order to provide antireflective protection, an intermediate antireflective second layer 48 is deposited on the inner antistatic first layer 46. The intermediate antireflective second layer 48 is selected so as to have a relatively high light refractive index, such as in the range of from 1.8 to 2.2, which includes materials such as tin oxide, tantalum oxide, titanium oxide, or antimony-doped or arsenic-doped tin oxide. The thickness of the second layer 48 is determined by the light whose reflections are to be suppressed. For example, in order to obtain minimum reflectivity at a wavelength of 550 nm, the thickness of the intermediate antireflective second layer 48 should be in the order of 1/4 the wavelength of this light, i.e. from 137 to 138 nm.

The multilayer antistatic and antireflective coating 44 further includes an outer antireflective third layer 50 deposited on the intermediate antireflective second layer 48. The third layer 50 is characterised by a relatively low light refractive index, preferably in the range of from 1.2 to 1.45. The outer antireflective third layer 50 has a thickness also in accordance with the 1/4 wavelength antireflective criteria for reducing light reflection at a given wavelength. Examples of coating materials of which the third layer 50 may be comprised include silicon oxide and magnesium fluoride, and other antireflective optical coating materials well know to those skilled in the relevant arts.

In accordance with another embodiment of the present invention, the outer antireflective third layer 50 may be omitted and the multilayer antistatic and antireflective coating 40 may be comprised of only the inner antistatic first layer 46 and the antireflective second layer 48. In this embodiment, the inner antistatic first layer 46 is preferably comprised of a thin layer of a P-doped or F-doped tin oxide which is characterised by a high light refractive index greater than 1.8. In this embodiment the antireflective second layer 48 has a relatively low light refractive index, such as in the range of from 1.2 to 1.45. Examples of material which could be used as the antireflective second layer include, but are not limited to, the aforementioned silicon oxide and magnesium fluoride. In this second embodiment, the provision of an outer antireflective third layer is eliminated.

Referring to Figure 3, there is shown a flow chart illustrating the steps involved in applying an antistatic and antireflective coating to a video display panel in accordance with the present invention. At step 58, the inner antistatic first layer is applied to the display panel in the form of a thin layer. During application of the antistatic first layer to the display panel, the display panel is heated at step 60 to a temperature in the range of from 500°C to 600°C. Following application of the antistatic first layer to the video display panel, one embodiment of the present invention calls for applying an antireflective second layer to the display panel at step 62. The antireflective second layer has a relatively low light refractive index, i.e. in the range of from 1.2 to 1.45, while the inner antistatic first layer preferably has a relatively high light refractive index, i.e. greater than 1.8.

In another embodiment, an outer antireflective second layer is applied to the inner antistatic first layer at step 64. The antireflective second layer preferably has a relatively high light refractive index, i.e. in the range of from 1.8 to 2.2. In this embodiment, an outer antireflective third layer, preferably having a relatively low light refractive index, is applied to the intermediate antireflective second layer at step 66. The outer antireflective third layer preferably has a relatively low light refractive index such as in the range of from 1.2 to 1.45. The first embodiment described above eliminates the need for two antireflective layers applied to the inner antistatic first layer.

There has thus been shown an improved antistatic and antireflective coating for a video display panel which includes an inner antistatic layer and one or more outer antireflective layers. In an embodiment including an inner antistatic layer and one outer antireflective layer, an antistatic layer having a relatively high light refractive index is combined with an antireflective layer having a relatively low light refractive index. In an embodiment including two outer antireflective layers, the intermediate antireflective layer is provided with a relatively high light refractive index, while the outer antireflective layer is provided with a relatively low light refractive index. The glass display panel is heated during application of the inner antistatic first layer allowing the antistatic layer to penetrate the outer surface of the display panel to a depth of the order of 0.5 to 1µm providing the display panel with an electrical conductivity as high as 10 ohm-cm. It has been determined that an electrical conductivity of 10 ohm-cm provides not only antistatic protection, but also electrostatic and electromagnetic shielding protection for the video display panel. Penetration of the antistatic coating layer into the outer surface of the display panel provides the antistatic layer with a high degree of resistance to scratching and wearing when the panel is rubbed, such as during cleaning of the panel.

Although the invention has been described with particular reference to antistatic and antireflective coatings applied to glass video display panels, e.g. the faceplates of CRTs, it will be appreciated that the invention also finds application in removable screens, e.g. antireflective screen filters or the like, which can be removably positioned in front of visual display units (VDUs).

While particular embodiments of the present invention have been shown and described, it will be obvious to those skilled in the art that changes and modifications may be made without departing from the invention in its broader aspects. The matter set forth in the foregoing description and accompanying drawings is offered by way of illustration only and not as a limitation. The actual scope of the invention is intended to be defined in the following claims when viewed in their proper perspective based on the prior art.

## Claims

1. A method for coating an outer surface of a light transmitting, e.g. glass, substrate (40) comprising applying a conductive first layer (46) to the outer surface of the glass substrate (40) and applying an antireflective second layer (48) to the glass substrate over said conductive first layer (46), characterised in that the glass substrate (4) and said conductive first layer (46) are heated to an elevated temperature whereupon said conductive first layer (46) diffuses into, and renders conductive, the outer surface of the glass substrate (40).

2. A method according to claim 1, characterised in that said conductive first layer comprises doped tin oxide.

3. A method according to claim 2, characterised in that said conductive first layer (46) comprises phosphor- or fluorine-doped tin oxide.

4. A method according to any one of the preceding claims, characterised in that said glass substrate (40) and said conductive first layer (46) are heated to a temperature above 500°C.

5. A method according to any one of the preceding claims, characterised in that said antireflective second layer (48) has a thickness of 1/4 the wavelength of light the reflection of which is to be suppressed.

6. A method according to any one of the preceding claims, characterised in that said antireflective second layer (48) is provided with a light refractive index in the range of from 1.2 to 1.45.

7. A method according to any one of the preceding claims, characterised in that said antireflective second layer (48) comprises silicon oxide or magnesium fluoride.

8. A method according to claim 5, characterised in that an antireflective third layer (50) is applied to the glass substrate (40) over said antireflective second layer, said antireflective second layer (48) having a light refractive index which is higher than that of said antireflective third layer (50).

9. A method according to claim 8, characterised in that said antireflective second layer (48) has a light refractive index in the range of from 1.8 to 2.2 and said antireflective third layer (50) has a light refractive index in the range of from 1.2 to 1.45.

10. A method according to claim 8 or 9, characterised in that said antireflective second layer (48) comprises tin oxide, antimony- or arsenic-doped tin oxide, tantalum oxide, or titanium oxide.

11. A method according to claim 8, 9 or 10, characterised in that said antireflective third layer comprises silicon oxide or magnesium fluoride.

12. A method according to claim 8, 9, 10 or 11, characterised in that the thickness of said antireflective third layer is 1/4 wavelength of light the reflection of which is to be suppressed.

13. A light transmitting screen, for example a cathode ray tube faceplate, comprising a light transmitting substrate (40) and a multilayer coating (44) applied to the substrate (40), characterised in that said multilayer coating (44) comprises an inner, conductive, grounded first layer (46) disposed on an outer surface of said substrate (40) and which is characterised as diffusing into an outer portion of said substrate when heated to an elevated temperature for rendering conductive the outer portion of said substrate (40), and an outer, antireflective, second layer (48), having a lower light refractive index than that of said first layer (46), disposed on said first layer (46) for reducing light reflection from said screen.

14. A screen according to claim 13, characterised in that said conductive first layer (46) comprises doped tin oxide.

15. A screen according to claim 13 or 14, characterised in that said conductive first layer (46) comprises phosphor- or fluorine-doped tin oxide.

16. A screen according to any one of claims 13 to 15, characterised in that said elevated temperature is at least 500°C.

17. A screen according to any one of claims 13 to 16, characterised in that said antireflective second coating (48) has a light refractive index in the range of from 1.2 to 1.45.

18. A screen according to any one of claims 13 to 17, characterised in that said antireflective second layer (48) has a thickness of 1/4 λ, where λ is the wavelength of the light the reflection of which is to be reduced.

19. A screen according to any one of claims 13 to 18, characterised in that said antireflective second layer (48) comprises silicon oxide or magnesium fluoride.

20. A screen according to claim 13, characterised in that an antireflective third layer (50) is disposed on the outer surface of said substrate (40) over the antireflective second layer (48).

21. A screen according to claim 20, characterised in that said antireflective second layer (48) has a higher light refractive index than that of said antireflective third layer (50).

22. A screen according to claim 21, characterised in that said antireflective second layer (48) has a light refractive index in the range of from 1.8 to 2.2 and said antireflective third layer (50) has a light refractive index in the range of from 1.2 to 1.45.

23. A screen according to claim 20, 21 or 22, characterised in that said antireflective second layer (48) comprises tin oxide, antimony- or arsenic-doped tin oxide, tantalum oxide, or titanium oxide.

24. A screen according to any one of claims 20 to 23, characterised in that said antireflective third layer (50) comprises silicone oxide or magnesium fluoride.

25. A screen according to any one of claims 20 to 24, characterised in that the thickness of each of said antireflective second and third layers (48,50) is of the order of 1/4 λ, where λ is the wavelength of the light the reflection of which is to be reduced.
